Europäisches Patentamt

(19) **European Patent Office**

**Office européen des brevets**

(11) Veröffentlichungsnummer: **0 034 355**
A1

(12) # EUROPÄISCHE PATENTANMELDUNG

(21) Anmeldenummer: **81101035.4**

(22) Anmeldetag: **13.02.81**

(51) Int. Cl.³: **H 04 L 11/00**
H 04 J 3/06, H 04 J 3/16

(30) Priorität: **19.02.80 DE 3006165**

(43) Veröffentlichungstag der Anmeldung:
**26.08.81 Patentblatt 81/34**

(84) Benannte Vertragsstaaten:
**FR NL**

(71) Anmelder: **SIEMENS AKTIENGESELLSCHAFT Berlin und München**
**Postfach 22 02 61**
**D-8000 München 22(DE)**

(72) Erfinder: **Niethammer, Dieter, Ing. grad.**
**Zugspitzstrasse 34**
**D-8011 Putzbrunn(DE)**

(72) Erfinder: **Eggertsberger, Robert, Ing. grad.**
**Bahnhofstrasse 42'III**
**D-6300 Giessen(DE)**

(72) Erfinder: **Wilmers, Gerhard, Dipl.-Phys.**
**Fasangartenstrasse 162**
**D-8000 München 90(DE)**

(54) Ankoppeleinrichtung zum Ankoppeln zweier Datenverarbeitungsanlagen.

(57) Ankoppeleinrichtung zum Ankoppeln zweier Datenverarbeitungsanlagen (ZM1 bzw. KZ) mit einer ersten bzw. zweiten Taktleitung (TS1 bzw. TS2), einem ersten bzw. zweiten Sendebus (SB1 bzw. SB2), einem ersten bzw. zweiten Adressenbus (AB1) bzw (AB2), und einem ersten bzw. zweiten Empfangsbus (EB1 bzw. EB2). Pro Adresse sind je zwei Speicherzellen (K1 bis Kn und L1 bis Ln) mit zugehörigen Adreßdecodierern (M1 bis Mn und N1 bis Nn) vorgesehen. Die Adreßdecodierer erhalten über den ersten Adressenbus (AB1) und über den zweiten Adressenbus (AB2) die Adressen und geben bei Erkennung der zugeordneten Adresse Decodiersignale an die Speicherzellen ab. Mit Hilfe einer Taktsteuerung (TST1, TST2) werden Schreibbefehle und Lesebefehle erzeugt, mit Hilfe derer die einzelnen Bits der beiden Sendebusse (SB1, SB2) in die jeweils adressierten Speicherzellen eingeschrieben und über die beiden Empfangsbusse (EB1, EB2) weitergeleitet werden.

FIG 3

SIEMENS AKTIENGESELLSCHAFT          Unser Zeichen
Berlin und München                  VPA 80 P 2 3 1 4 E

Ankoppeleinrichtung zum Ankoppeln zweier Datenverarbeitungsanlagen

Die Erfindung bezieht sich auf eine Ankoppeleinrichtung
zum Ankoppeln einer ersten Datenverarbeitungsanlage an eine
zweite Datenverarbeitungsanlage; mit einem ersten Sendebus, einem ersten Adressenbus, einem ersten Empfangsbus
und einer ersten Taktleitung im Bereich der ersten Datenverarbeitungsanlage; mit einem zweiten Sendebus, mit einem
zweiten Adressenbus, einem zweiten Empfangsbus und einer
zweiten Taktleitung im Bereich der zweiten Datenverarbeitungsanlage. Als erste bzw. zweite Datenverarbeitungsanlage kann beispielsweise je ein Zeitmultiplexsystem vorgesehen sein. Es kann aber auch als erste Datenverarbeitungsanlage ein Zeitmultiplexsystem und als zweite Datenverarbeitungsanlage ein Konzentrator vorgesehen sein.

Gemäß einem internen Stand der Technik können Konzentratoren kanalindividuell an Zeitmultiplexsysteme angekoppelt
werden, wobei pro Kanal je eine Kanalausgangsschaltung,
eine Kanaleingangsschaltung und eine Verbindungsleitung
erforderlich sind. Wenn beispielsweise ein Zeitmultiplexsystem über 96 Kanäle an einen Konzentrator anzuschließen
ist, dann sind außer 96 Verbindungsleitungen 96 Kanalausgangsschaltungen und 96 Kanaleingangsschaltungen vorzusehen.

Der Erfindung liegt die Aufgabe zugrunde, eine Ankoppeleinrichtung anzugeben, mit Hilfe der - auch bei einer großen
Anzahl von Kanälen - eine Ankopplung mit relativ geringem
technischen Aufwand durchführbar ist.

Die der Erfindung zugrundeliegende Aufgabe wird dadurch
gelöst, daß pro Adresse des ersten Adressenbusses je eine
Wdb 1 Ram / 11.2.80

erste Speicherzelle und pro Adresse des zweiten Adressenbusses je eine zweite Speicherzelle vorgesehen ist, daß die Gruppe der ersten Speicherzellen über ihre Dateneingänge an den ersten Sendebus und über ihre Datenausgänge an den zweiten Empfangsbus angeschlossen ist, daß die Gruppe der zweiten Speicherzellen über ihre Dateneingänge an den zweiten Sendebus und über ihre Datenausgänge an den ersten Empfangsbus angeschlossen ist, daß die erste und die zweite Gruppe von Speicherzellen über Decodierleitungen an Adreßdecodierer angeschlossen sind, daß die Adreßdecodierer mit dem ersten Adressenbus und dem zweiten Adressenbus verbunden sind, daß eine erste und zweite Taktsteuerung an die erste und zweite Taktleitung angeschlossen sind und mit Hilfe der ersten bzw. zweiten Taktsteuerung Folgen von ersten bzw. zweiten Schreibbefehlen erzeugt werden, mit denen die Daten des ersten bzw. zweiten Sendebusses in die adressierten Speicherzellen der ersten bzw. zweiten Gruppe übernommen werden und daß die erste bzw. zweite Taktsteuerung Folgen von ersten bzw. zweiten Lesebefehlen erzeugt, mit Hilfe derer die Daten aus den Speicherzellen der ersten bzw. zweiten Gruppe ausgelesen werden.

Die erfindungsgemäße Ankoppeleinrichtung zeichnet sich durch geringen technischen Aufwand aus, weil pro Kanal und Adresse nur eine Speicherzelle erforderlich ist und weil die Verdrahtung zum Anschluß der Ankoppeleinrichtung an die beiden Datenverarbeitungsanlagen einen vergleichsweise geringen technischen Aufwand erfordert. Ein weiterer Vorteil der Ankoppeleinrichtung ist darin zu sehen, daß deren Speicherzellen zentral angeordnet und daher mit einem RAM-Speicher preisgünstig und platzsparend realisiert werden können.

Falls sich die über die beiden Taktleitungen übertragenen Taktsignale nur um eine gleichbleibende Phasendifferenz unterscheiden, ist es zweckmäßig, daß die ersten bzw. zweiten Schreibbefehle mit vorgegebenen Impulsflanken des über die erste bzw. zweite Taktleitung zugeführten Taktsignals koinzidieren und daß die ersten bzw. zweiten Lesebefehle nach den ersten bzw. zweiten Schreibbefehlen erzeugt werden, wenn das zweite bzw. erste Taktsignal einen vorgegebenen Binärwert annimmt.

Falls sich ändernde Phasendifferenzen der beiden Taktsignale und/oder unterschiedliche Folgefrequenzen der Taktsignale zu erwarten sind, ist es zweckmäßig, daß der erste Sendebus bzw. der erste Adressenbus über eine erste Gruppe von Pufferspeichern an die erste Gruppe der Speicherzellen und der zweite Sendebus bzw. der zweite Adressenbus über eine zweite Gruppe von Pufferspeichern an die zweite Gruppe der Speicherzellen angeschlossen sind, daß die erste Gruppe der Pufferspeicher bzw. die zweite Gruppe der Pufferspeicher mit einem ersten bzw. zweiten Speichersignal gesteuert wird, das mit Impulsflanken des ersten bzw. zweiten Taktsignals koinzidiert und daß die Folge der ersten bzw. zweiten Schreibbefehle nach dem Auftreten der ersten bzw. zweiten Speichersignale und gleichzeitig mit einem vorgegebenen Binärwert des zweiten bzw. ersten Taktsignals erzeugt wird.

Diese Ausführungsform der Ankoppeleinrichtung zeichnet sich dadurch aus, daß die beiden Adressengeber zur Erzeugung der Adressen für den ersten Adressenbus und für den zweiten Adressenbus unabhängig voneinander arbeiten können, so daß beispielsweise keine Taktwiedergewinnungsschaltung erforderlich ist, mit Hilfe der eine phasenmäßige Übereinstimmung der beiden Taktsignale hergestellt werden könnte.

Falls außer den Daten auch Prüfschleifensignale zur Einschaltung von Prüfschleifen übertragen werden sollen, ist es zweckmäßig, daß eine dritte Gruppe von Speicherzellen vorgesehen ist, deren Dateneingänge an einen Prüfsignalbus angeschlossen sind, deren Datenausgänge an eine Prüfschleifensteuerstufe angeschlossen sind und die an die Decodier-

0034355

leitungen der ersten oder der zweiten Gruppe von Speicherzellen angeschlossen sind, daß zwei Schalter vorgesehen sind, die in einer ersten Schalterstellung dem zweiten Sendebus mit den Dateneingängen der zweiten Gruppe von Speicherzellen und die Datenausgänge der ersten Gruppe von Speicherzellen mit dem zweiten Empfangsbus verbinden bzw. den ersten Sendebus mit den Dateneingängen der ersten Gruppe von Speicherzellen und die Datenausgänge der zweiten Gruppe von Speicherzellen mit dem ersten Empfangsbus verbinden, daß die zwei Schalter in ihrer zweiten Schalterstellung die Datenausgänge der ersten Gruppe von Speicherzellen über eine Prüfschleife an die Dateneingänge der zweiten Gruppe von Speicherzellen bzw. die Datenausgänge der zweiten Gruppe von Speicherzellen über die Prüfschleife an die Dateneingänge verbinden und daß mit der Prüfschleifensteuerstufe bei fehlendem Prüfsignal bzw. bei vorhandenem Prüfsignal die erste bzw. zweite Schalterstellung eingestellt wird.

Im folgenden werden Ausführungsbeispiele der Erfindung anhand der Figuren 1 bis 11 beschrieben.

Es zeigen:

Fig. 1 eine bekannte Ankoppeleinrichtung zum Ankoppeln eines Zeitmultiplexsystems an einen Konzentrator,

Fig. 2 ein Ausführungsbeispiel der erfindungsgemäßen Ankoppeleinrichtung in schematischer Darstellung,

Fig. 3 ein ausführlicheres Ausführungsbeispiel der Ankoppeleinrichtung,

Fig. 4 einige Signale, die beim Betrieb der Ankoppeleinrichtung gemäß Fig. 3 auftreten,

Fig. 5 ein Ausführungsbeispiel der in Fig. 3 schematisch dargestellten ersten Taktsteuerung,

Fig. 6 ein Ausführungsbeispiel der in Fig. 3 schematisch dargestellten zweiten Taktsteuerung,

Fig. 7 eine weitere ausführliche Darstellung einer Ankoppeleinrichtung mit Pufferspeichern,

Fig. 8 einige Signale, die beim Betrieb der in Fig. 7 dargestellten Ankoppeleinrichtung auftreten,

Fig. 9 eine ausführlichere Darstellung der in Fig. 7 schematisch dargestellten Taktsteuerung TST3,

Fig. 10 eine ausführlichere Darstellung der in Fig. 7 schematisch dargestellten Taktsteuerung TST4,

Fig. 11 ein weiteres Ausführungsbeispiel einer Ankoppeleinrichtung mit Prüfschleife.

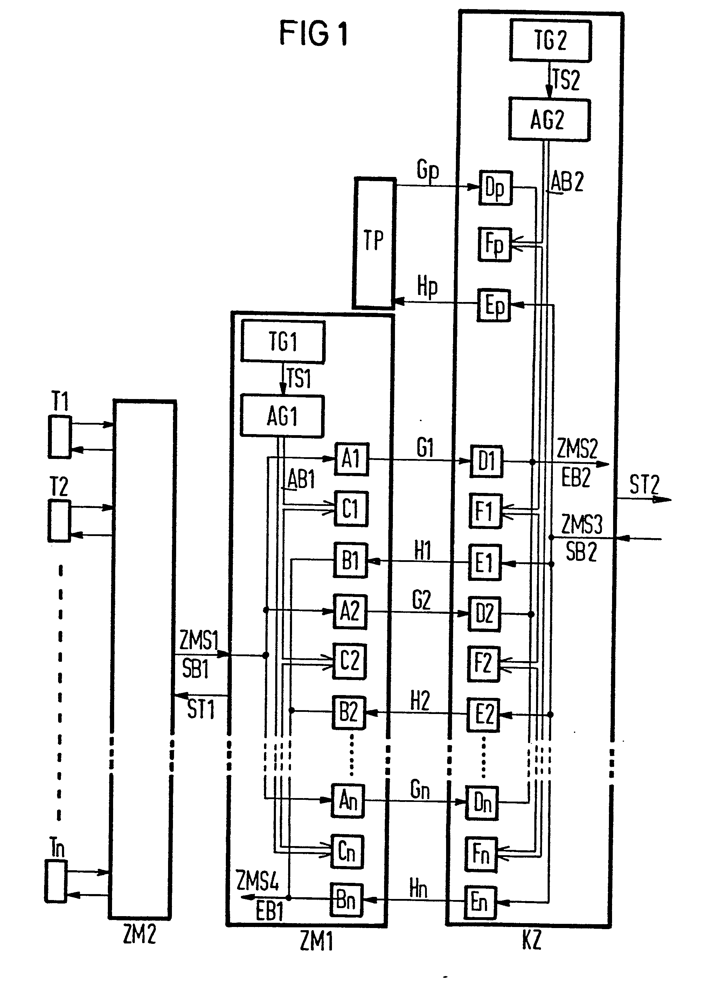

Fig. 1 zeigt Datenübertragungseinrichtungen, mit Hilfe derer einerseits die Daten der Teilnehmer T1, T2 ... Tn über das Zeitmultiplexsysteme ZM2 über die Übertragungsstrecke ST1, über das Zeitmultiplexsystem ZM1, über den Konzentrator KZ und über die Übertragungsstrecke ST2 an nicht dargestellte Dateneinrichtungen abgegeben werden. Andererseits werden Daten dieser Dateneinrichtungen über die Übertragungsstrecke ST2,über den Konzentrator KZ und über die Zeitmultiplexsysteme ZM1, ZM2 den Teilnehmern T1 bis Tn zugeleitet. Die Übertragungsstrecke ST2 kann beispielsweise an eine Vermittlungseinrichtung oder an einen weiteren, nicht dargestellten Konzentrator angeschlossen sein.

Das Zeitmultiplexsystem ZM1 und der Teilnehmer Tp können einige Meter bis zu einigen hundert Metern vom Konzentrator KZ entfernt sein. Das Zeitmultiplexsystem ZM1 und der Teilnehmer Tp liegen somit im Ortsbereich des Konzentrators KZ und sind direkt an diesen Konzentrator angeschlossen. Weiter entfernte Teilnehmer nach Art der Teilnehmer T1 ... Tn können mit Hilfe der Zeitmultiplexsysteme ZM2, ZM1 an den Konzentrator angeschlossen werden. Dabei können die Teilnehmer T1 bis Tn im Prinzip beliebig weit vom Zeitmultiplexsystem ZM1 entfernt sein.

Innerhalb des Zeitmultiplexsystems ZM1 sind üblicherweise die Kanalausgangsschaltungen A1, A2 ... An, die Kanaleingangsschaltungen B1, B2 ... Bn und die Adreßdecodierer C1, C2, ... Cn vorgesehen. Über den Sendebus SB1 wird das von den Teilnehmern T1 bis Tn stammende Zeitmultiplexsignal

ZMS1 an die Kanalausgangsschaltungen A1 bis An abgegeben.
Die Zeitschlitze des Zeitmultiplexsignals ZMS1 sind den
einzelnen Teilnehmern zugeordnet. Vom Konzentrator KZ aus
gesehen ist die Zuordnung der einzelnen Zeitschlitze zu
den einzelnen Teilnehmern belanglos. Es können hier mehrere an sich bekannte Alternativen unterschieden werden.

Gemäß einer ersten Alternative können die Daten der einzelnen Teilnehmer mit gleichen Geschwindigkeiten und in
einem vorgegebenen Bitraster abgegeben werden. Während der
Dauer eines einzigen Bits werden in diesem Fall die Daten
aller Teilnehmer zeitlich nacheinander in je einen Zeitschlitz des Zeitmultiplexsignals übernommen. Bei insgesamt
n Teilnehmern sind n Kanalausgangsschaltungen A1 bis An,
Kanaleingangsschaltungen B1 bis Bn, Adreßdecodierer C1 bis
Cn vorgesehen. Innerhalb eines Zeitmultiplexrahmens wird
somit je ein Bit jedes Teilnehmers übertragen.

Gemäß einer zweiten Alternative können die Daten der Teilnehmer zwar mit gleicher Geschwindigkeit, aber nicht innerhalb eines vorgegebenen Bitrasters abgegeben werden.
In diesem Fall ist innerhalb des Zeitmultiplexsystems ZM2
eine nicht dargestellte bekannte Einrichtung vorgesehen,
mit Hilfe der ein Zeitmultiplexsignal erzeugt wird, dessen
Zeitschlitze, wie gemäß der ersten Alternative, der Reihe
nach den einzelnen Teilnehmern zugeordnet sind. Innerhalb
der Zeitmultiplexrahmen wird wieder je ein Bit jedes Teilnehmers übertragen.

Gemäß weiterer Alternativen können die Daten der Teilnehmer mit verschiedenen Geschwindigkeiten synchron oder asynchron an das Zeitmultiplexsystem ZM2 abgegeben werden. Auch
in diesen Fällen werden mit Hilfe von bekannten und innerhalb des Zeitmultiplexsystems ZM2 angeordneten Einrichtungen Zeitmultiplexsignale erzeugt, deren Zeitschlitze den
Teilnehmern zugeordnet sind, wobei jedoch innerhalb eines
Zeitmultiplexrahmens umso mehr Zeitschlitze den einzelnen Teilnehmern zugeordnet sind, je größer die Geschwindigkeit ist, mit der dieser Teilnehmer die Daten abgibt. Unter diesen Voraussetzungen sind weniger Teilnehmer vorgesehen, als Kanalausgangsschaltungen bzw. Kanaleingangsschaltungen bzw. Adreßdecodierer.

Zwecks einfacherer Darstellung gelangt gemäß Fig. 1 das Zeitmultiplexsignal ZMS1 direkt zum Sendebus SB1; die üblicherweise erforderlichen Übertragungseinrichtungen, Regeneriereinrichtungen und Synchronisiereinrichtungen sind somit nicht dargestellt.

Der Taktgeber TG1 erzeugt das Taktsignal TS1 und im Adressengeber AG1 werden Adressen erzeugt, die den einzelnen Zeitschlitzen des Zeitmultiplexsignals ZMS1 zugeordnet sind. Diese Adressen werden über den Adressenbus AB1 an die Adressendecodierer C1 bis Cn abgegeben. Wenn an einem Adressendecodierer die zugeordnete Adresse anliegt, dann gibt dieser Adressendecodierer ein Decodiersignal ab und aktiviert die mit ihm verbundene Kanalausgangsschaltung. Diese Kanalausgangsschaltung speichert dann das Bit des adressierten Zeitschlitzes. Als Kanalausgangsschaltung können beispielsweise Kippstufen vorgesehen sein, über deren Ausgangsleitungen G1, G2 ... Gn die gespeicherten Daten abgegeben werden.

Im Konzentrator KZ befinden sich der Taktgeber TG2, der Adressengeber AG2, die Kanaleingangsschaltungen Dp, D1, D2 ... Dn, die Kanalausgangsschaltungen Ep, E1, E2 ... En und die Adreßdecodierer Fp, F1, F2 ... Fn. Der Taktgeber TG2 erzeugt das Taktsignal TS2 und der Adressengeber AG2 gibt über den Adressenbus AB2 seriell Adressen ab. Jeder Adresse ist je einer der Adressendecodierer zugeordnet, der bei Aufruf der zugeordneten Adresse ein Decodiersignal abgibt. Mit diesem Decodiersignal wird die zugeordnete Kanaleingangsschaltung aktiviert. Wenn beispielsweise der Adreßdecodierer F1 ein Decodiersignal abgibt, dann wird

die Kanaleingangsschaltung D1 aktiviert und übernimmt während der Dauer der Adresse das über die Leitung G1 zugeführte Bit. An die Ausgänge der Kanaleingangsschaltungen D1 bis Dn ist der Empfangsbus EB2 angeschlossen , über den das Zeitmultiplexsignal ZMS2 abgegeben wird, dessen Zeitschlitze den Kanaleingangsschaltungen Dp, D1, D2 ... Dn zugeordnet sind.

In der Gegenrichtung wird über die Übertragungsstrecke ST2 ein weiteres Zeitmultiplexsignal SM3 dem Sendebus SB2 zugeleitet. Die Kanalausgangsschaltungen Ep, E1, E2 ... En arbeiten im Prinzip wie Kippstufen und werden beim seriellen Aufruf der Adressen mit den zugeordneten Decodiersignalen aktiviert. Über die Ausgangsleitungen Hp, H1, H2 ... Hn werden die jeweils in den Kanalausgangsschaltungen gespeicherten Bits abgegeben.

Die Kanaleingangsschaltungen B1, B2 ... Bn werden beim seriellen Aufruf der Adressen aktiviert. Über den Empfangsbus EB1 wird das Zeitmultiplexsignal ZMS4 abgegeben, dessen Zeitschlitze je den einzelnen Kanaleingangsschaltungen zugeordnet sind. Dieses Zeitmultiplexsignal ZMS4 wird zum Zeitmultiplexsystem ZM2 übertragen und die Daten der einzelnen Zeitschlitze werden den Teilnehmern T1 bis Tn zugeleitet.

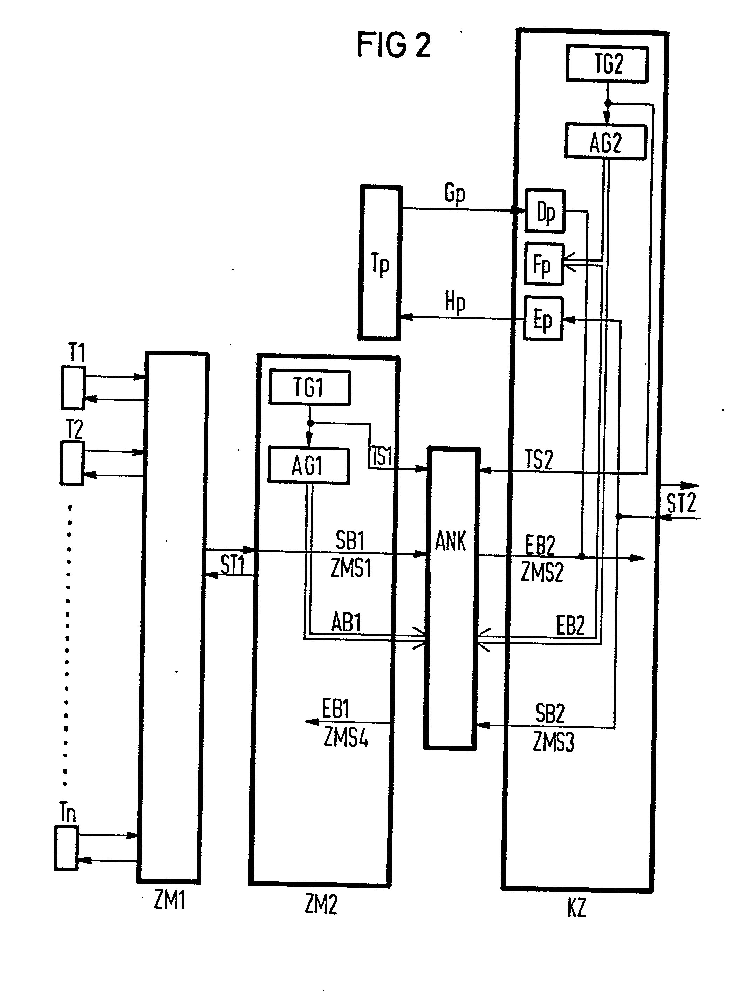

Fig. 2 zeigt ebenfalls Datenübertragungseinrichtungen, unterscheidet sich aber von den in Fig. 1 gezeigten Datenübertragungseinrichtungen hinsichtlich der Ankoppeleinrichtung ANK. An diese Ankoppeleinrichtung sind einerseits der Sendebus SB1, der Adressenbus AB1, der Empfangsbus EB1 und eine Leitung für die Taktsignale TS1 angeschlossen und andererseits sind angeschlossen eine Leitung für die Taktsignale TS2 und der Empfangsbus EB2, der Adressenbus AB2 und der Sendebus SB2.

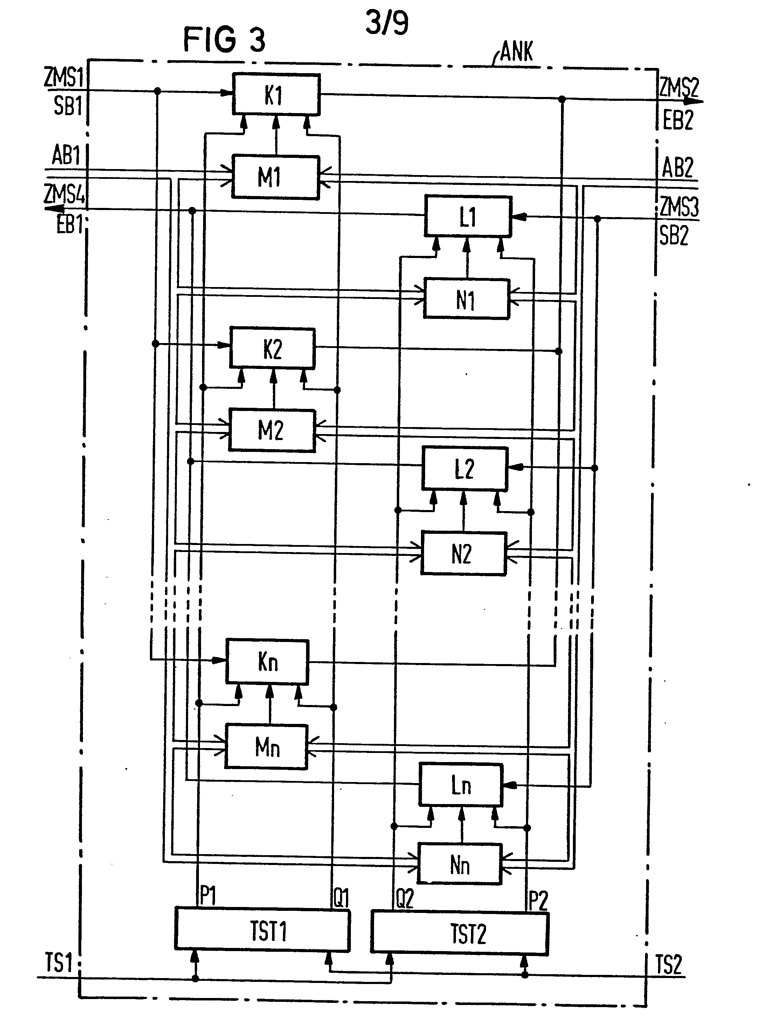

Fig. 3 zeigt ein Ausführungsbeispiel der in Fig. 2 schematisch dargestellten Ankoppeleinrichtung ANK. Pro Zeitschlitz des in Fig. 2 dargestellten Zeitmultiplexsystems ZM2 sind je eine erste Gruppe von Speicherzellen K1, K2 ... Kn und eine zweite Gruppe von Speicherzellen L1, L2 ... Ln vorgesehen. Die Speicherzellen K1, K2 ... Kn sind über ihre Dateneingänge an den Sendebus SB1 und über ihre Ausgänge an den Empfangsbus EB2 angeschlossen. Die Speicherzellen L1, L2 ... Ln sind über ihre Dateneingänge an den Sendebus SB2 und über ihre Datenausgänge an den Empfangsbus EB1 angeschlossen. Die Speicherzellen der ersten Gruppe werden mit Hilfe der Adressendecodierer M1, M2 ... Mn gesteuert, die Speicherzellen der zweiten Gruppe werden mit Hilfe der Adreßdecodierer N1, N2 ... Nn gesteuert. Mit Hilfe der Taktsteuerungen TST1, TST2 werden die Schreibbefehle P1, P2 und die Lesebefehle Q1, Q2 erzeugt.

Die in Fig. 3 dargestellte Ankoppeleinrichtung ANK erfüllt die gleiche Funktion wie die in Fig. 1 dargestellten Kanalausgangsschaltungen A1 bis An, E1 bis En, die Kanaleingangsschaltungen B1 bis Bn und D1 bis Dn, die Adreßdecodierer C1 bis Cn, F1 bis Fn und die Leitungen G1 bis Gn, H1 bis Hn. Die Ankoppeleinrichtung ANK zeichnet sich aber durch geringeren technischen Aufwand aus, weil pro Zeitschlitz nur zwei Speicherzellen, beispielsweise die Speicherzellen K1 und L1 vorgesehen sind, wogegen gemäß Fig. 1 pro Zeitschlitz zwei Kanalausgangsschaltungen und zwei Kanaleingangsschaltungen, beispielsweise die Kanalausgangsschaltungen A1, E1 und die Kanaleingangsschaltungen B1, D1 erforderlich sind. Ein weiterer Vorteil der Ankoppeleinrichtung ANK ist in der geringeren Verdrahtung mit den damit verbundenen geringeren Kosten zur Verdrahtung zu sehen. Gemäß Fig. 1 müssen ja pro Zeitschlitz je zwei Leitungen, beispielsweise die Leitungen G1 und H1 vorgesehen sein, so daß bei 48 Zeitschlitzen insgesamt 96 Leitungen erforderlich sind. Wenn für die Adressenbusse AB1 und AB2 je sechs Leitungen benötigt werden, dann sind gemäß Fig. 3 für den Sendebus SB1, den Empfangsbus EB1 das Taktsignal TS1, den Empfangsbus EB2, den Sendebus SB2, für das Taktsignal TS2 je eine Leitung, für die Adressenbusse AB1 und
AB2 je sechs Leitungen und somit insgesamt 18 Leitungen
erforderlich.

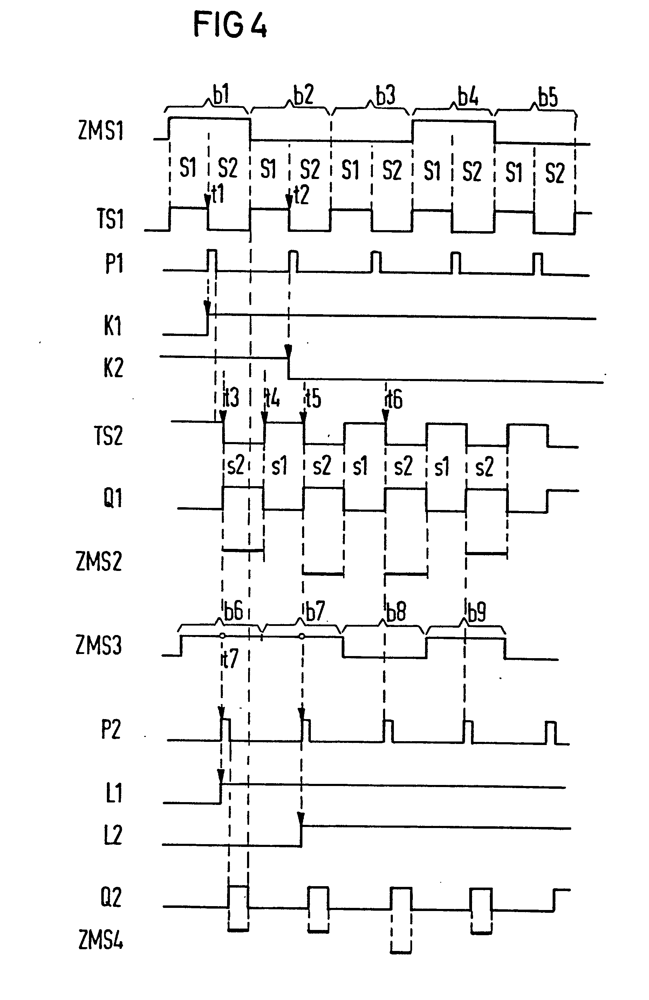

Fig. 4 zeigt einige Signale, anhand derer die Wirkungsweise der in Fig. 3 dargestellten Ankoppeleinrichtung erläutert wird. Insbesondere sind in Fig. 4 die Zeitmultiplexsignale ZMS1, ZMS2, ZMS3 und ZMS4 dargestellt. Bei diesem
Ausführungsbeispiel wird angenommen, daß das Zeitmultiplexsignal ZMS1 gemäß Fig. 2 über die Übertragungsstrecke ST1
und den ersten Sendebus SB1 übertragen wird, daß das Zeitmultiplexsignal ZMS2 über den zweiten Empfangsbus EB2 und
die Übertragungsstrecke ST2 übertragen wird, daß das Zeitmultiplexsignal ZMS3 über die Übertragungsstrecke ST2 und
den zweiten Sendebus SB2 übertragen wird und daß das Zeitmultiplexsignal ZMS4 über den ersten Empfangsbus EB1 und
die Übertragungsstrecke ST1 übertragen wird. Im Gegensatz
dazu treten bei praktisch realisierten Ausführungsbeispielen die Zeitmultiplexsignale ZMS1 und ZMS4 nur im Bereich
des Zeitmultiplexsystems ZMS2 auf, wogegen über die Übertragungsstrecke ST1 Zeitmultiplexsignale übertragen werden, deren Bitraten sich von den Bitraten der Zeitmultiplexsignale ZMS1 und ZMS4 unterscheiden. Auch die Zeitmultiplexsignale ZMS2 und ZMS3 können bei realisierten Ausführungsbeispielen nur im Bereich des Konzentrators KZ
auftreten und können sich hinsichtlich ihrer Bitraten von
jenen Zeitmultiplexsignalen unterscheiden, die über die
Übertragungsstrecke ST2 übertragen werden. Auf diese unterschiedlichen Bitraten der Zeitmultiplexsignale ZMS1,
ZMS2, ZMS3, ZMS4 einerseits und der Zeitmultiplexsignale
im Bereich der Übertragungsstrecken ST1 und ST2 andererseits wird nicht näher eingegangen, weil es im Zusammenhang mit dem vorliegenden Gegenstand nur auf die Zeitmultiplexsignale ZMS1, ZMS2, ZMS3, ZMS4 im Bereich des Zeitmultiplexsystems ZM2 bzw. im Bereich des Konzentrators KZ
ankommt und Geschwindigkeitstransformationen dieser Zeit- multiplexsignale nicht in den Rahmen der vorliegenden Ausführungen fallen.

In Fig. 4 ist oben das Zeitmultiplexsignal ZMS1 dargestellt, dessen Binärwerte b1, b2, b3, b4, b5 innerhalb aufeinanderfolgender Zeitschlitze auftreten. Die Zeitschlitze werden durch die Adressen festgelegt, die über den Adressenbus AB1 abgegeben werden. Jeder Adresse und jedem Zeitschlitz ist auch je eine Periode des Taktsignals TS1 zugeordnet. Jede Periode des Taktsignals TS1 besteht aus zwei Teilen; die Periode, die dem Binärwert b3 zugeordnet ist, besteht beispielsweise aus den Teilen S1 und S2. Diese Teile werden durch die Binärwerte des Taktsignals TS1 definiert. Der erste Teil S1 der Periode ist durch einen 1-Wert und der zweite Teil S2 der Periode ist durch einen 0-Wert des Taktsignals TS1 charakterisiert. Bei diesem Ausführungsbeispiel sind die beiden Teile S1 und S2 gleich groß, so daß die negativen Impulsflanken des Taktsignals TS1 in der Mitte der einzelnen Zeitschlitze liegen. Im allgemeinen ist dies nicht der Fall. Es wäre auch denkbar, dem ersten Teil S1 einen 0-Wert und dem zweiten Teil S2 einen 1-Wert des Taktsignals TS1 zuzuordnen.

Bei diesem Ausführungsbeispiel wird angenommen, daß die beiden Taktsignale TS1 und TS2 gleiche Impulsfolgefrequenz besitzen, aber phasenmäßig gegeneinander versetzt sind. Beispielsweise wird die dargestellte Phasenlage des Taktsignals TS2 angenommen. Alle Perioden dieses Taktsignals TS2 bestehen ebenfalls aus zwei Teilen, die durch die Binärwerte des Taktsignals TS2 unterschieden werden. Bei diesem Ausführungsbeispiel wird dem ersten Teil s1 ein 1-Wert und dem zweiten Teil s2 ein 0-Wert des Taktsignals TS2 zugeordnet. Diese Zuordnung ist willkürlich, es wäre grundsätzlich auch denkbar, dem ersten Teil s1 einen 0-Wert und dem zweiten Teil s2 einen 1-Wert des Taktsignals TS2 zuzuordnen.

Die in Fig. 3 dargestellte Ankoppeleinrichtung bezweckt, die einzelnen Binärwerte des Zeitmultiplexsignals ZMS1 zeitlich nacheinander im Takt des Taktsignals TS1 zu speichern und anschließend im Takt des Taktsignals TS2 wieder auszulesen. Dabei werden die einzelnen Binärwerte des Zeitmultiplexsignals immer während der zweiten Teile S2 des Taktsignals TS1 eingeschrieben und immer während der zweiten Teile s2 des Taktsignals TS2 gelesen. Es hat sich als vorteilhaft erwiesen, die einzelnen Binärwerte b1, b2 ... des Zeitmultiplexsignals ZMS1 jeweils am Ende der zweiten Teile S2 in die Speicherzellen K1 bis Kn zu übernehmen. Zwecks übersichtlicherer Darstellung sind gemäß Fig. 4 die negativen Impulsflanken des Taktsignals TS1 in der Mitte der einzelnen Zeitschlitze und Binärwerte dargestellt und mit diesen negativen Flanken des Taktsignals TS1 werden die Schreibbefehle P1 abgeleitet. Es wird angenommen, daß die zum Zeitpunkt t1 aufgerufene Adresse dem Adressendecodierer M1 zugeordnet ist und daß zum Zeitpunkt t1 ein Decodierimpuls an die Speicherzelle K1 abgegeben wird. Mit dem gleichzeitig abgegebenen Schreibbefehl P1 wird der Binärwert b1 in der Speicherzelle K1 gespeichert. Diese Einspeicherung erfolgt also während des zweiten Teiles S2 der dem Binärwert b1 zugeordneten Periode des Taktsignals TS1.

Zum Zeitpunkt t2 gibt der Adreßdecodierer M2 einen Decodierimpuls ab und mit einem gleichzeitig auftretenden Schreibbefehl P1 wird der Binärwert b2 in die Speicherzelle K2 übernommen. Auf diese Weise werden der Reihe nach auch alle weiteren Binärwerte des Zeitmultiplexsignals ZMS1 in die weiteren Speicherzellen übernommen.

Das Auslesen der in den Speicherzellen K1 bis Kn gespeicherten Binärwerte kann frühestens im Anschluß an die Speicherbefehle P1 erfolgen und soll, wie bereits erwähnt, während der zweiten Teile s2 und während der O-Werte des Taktsignals TS2 vorgenommen werden. Einer der Lesebefehle Q1 wird daher mit Hilfe der Taktsteuerung TST1 derart erzeugt, daß dessen Vorderflanke zum Zeitpunkt t3 und dessen Rückflanke zum Zeitpunkt t4 auftritt. Über den Adressenbus AB2
erhält der Adreßdecodierer M1 die zugeordnete Adresse und
gibt während des zweiten Teils s2 der zugeordneten Periode
des Taktsignals TS2 einen Decodierimpuls an die Speicherzelle K1 ab; unter dieser Voraussetzung wird mit dem Lesebefehl Q1 der dargestellte 1-Wert des Zeitmultiplexsignals
ZMS2 abgegeben. In ähnlicher Weise werden ab dem Zeitpunkt
t5 und ab dem Zeitpunkt t6 weitere Binärwerte des Zeitmultiplexsignals ZMS2 erzeugt. Dieses Zeitmultiplexsignal
ZMS2 ist nur teilweise dargestellt, weil die nicht dargestellten Teile des Signals belanglos sind. Ein Empfänger
dieses Zeitmultiplexsignals ZMS2 ist derart eingestellt,
daß er nur die dargestellten Binärwerte des Zeitmultiplexsignals ZMS2 verwertet. Das Zeitmultiplexsignal ZMS2 signalisiert mit geringfügiger Phasenverschiebung die gleichen Binärwerte, wie das Zeitmultiplexsignal ZMS1.

Über den Sendebus SB2 wird das Zeitmultiplexsignal ZMS3
zugeführt. Die einzelnen Bits b6, b7, b8, b9 ... sollen
in die Speicherzellen L1 bis Ln übernommen werden. Das Einschreiben dieser Bits geschieht während der Teile s2 des
Taktsignals TS2. Das Auslesen dieser Bits geschieht während des Auftretens der Teile S2 des Taktsignals ZMS1. Mit
Hilfe der in Fig. 3 dargestellten Taktsteuerung TST2 wird
zunächst die Folge der Schreibbefehle P2 erzeugt; deren
Vorderflanken koinzidieren mit den negativen Flanken des
Taktsignals TS2. Zum Zeitpunkt t7 erhält der Decodierer
N1 über den Adressenbus AB2 die zugeordnete Adresse und
gibt einen Decodierimpuls ab. Mit einem gleichzeitig auftretenden Schreibbefehl P2 wird der Binärwert b6 des Zeitmultiplexsignals ZMS3 in der Speicherzelle L1 gespeichert.
In ähnlicher Weise wird zum Zeitpunkt t8 der Binärwert b7
in der Speicherzelle L2 gespeichert. Die Lesebefehle Q2
werden derart erzeugt, daß sie einerseits nach einem
Schreibbefehl P2 aber während der Teile S2 auftreten. Wenn
die dem Decodierer N1 zugeordnete Adresse aufgerufen wird,
dann gibt er einen Decodierimpuls an die Speicherzelle L1 ab und mit Hilfe eines Lesebefehls Q2 wird der Binärwert b6 in das Zeitmultiplexsignals ZMS4 übernommen. In ähnlicher Weise wird der Binärwert b7 in das Zeitmultiplexsignal ZMS4 eingefügt. Auch von diesem Zeitmultiplexsignal ZMS4 sind nur jene relevanten Teile dargestellt, die von den in Fig. 1 dargestellten Teilnehmern T1 bis Tn verwertet werden.

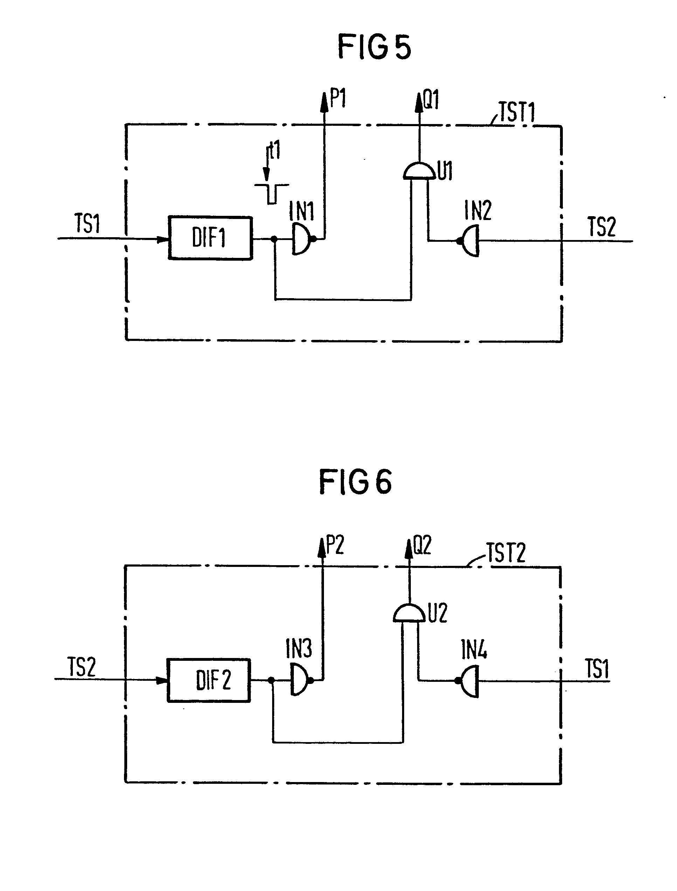

Fig. 5 zeigt ein Ausführungsbeispiel der in Fig. 3 schematisch dargestellten Taktsteuerung TST1. Mit Hilfe der Stufe DIF1 wird das Taktsignal TS1 differenziert und mit Hilfe eines Gleichrichters werden die dabei entstehenden positiven Impulse unterdrückt und nur die negativen Impulse abgegeben. Beispielsweise wird zum Zeitpunkt t1 einer dieser negativen Impulse abgegeben, der mit Hilfe des Inverters IN1 invertiert und als Schreibbefehl P1 abgegeben wird. Mit Hilfe des Inverters IN2 wird das Taktsignal TS2 invertiert. Das UND-Glied U1 erhält die invertierten Schreibbefehle P1 und das invertierte Taktsignal TS2, so daß die Lesebefehle Q1 nur dann abgegeben werden, wenn kein Schreibbefehl P1 vorliegt und wenn das Taktsignal TS2 einen O-Wert aufweist.

Fig. 6 zeigt ein Ausführungsbeispiel der in Fig. 3 dargestellten Taktsteuerung TST2. Mit Hilfe der Stufe DIF2 wird das Taktsignal TS2 differenziert und gleichgerichtet, so daß die bei der Differentiation entstehenden positiven Impulse unterdrückt und nur die negativen Impulse abgegeben werden. Mit Hilfe des Inverters IN3 werden diese negativen Impulse invertiert, so daß sich die Schreibbefehle P2 ergeben. Dem UND-Glied U2 wird einerseits das mit dem Inverter IN4 invertierte Taktsignal TS1 und andererseits das Ausgangssignal der Stufe DIF2 zugeführt. Die vom Glied U2 abgegebenen Lesebefehle Q2 können nur dann auftreten, wenn einerseits kein Schreibbefehl P2 und andererseits ein O-Wert des Taktsignals TS1 vorliegt.

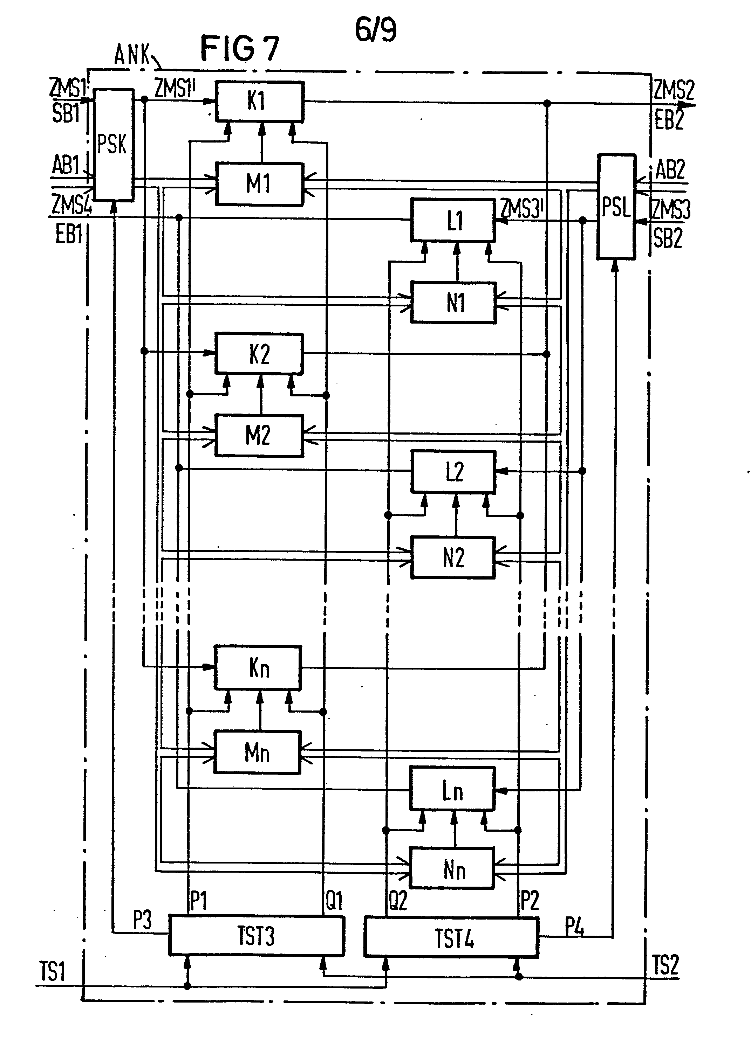

Fig. 7 zeigt ein weiteres Ausführungsbeispiel der in Fig. 2 schematisch dargestellten Ankoppeleinrichtung ANK. Bei Verwendung dieser Ankoppeleinrichtung wird angenommen, daß die Perioden der Taktsignale TS1 und TS2 verschieden sind. Während einer längeren Dauer haben diese Taktsignale TS1, TS2 aber gleiche mittlere Impulsfolgefrequenzen. Die Fig. 7 unterscheidet sich von der Fig. 3 durch die dargestellten Pufferspeicher PSK, PSL und durch die Taktsteuerungen TS3, TS4.

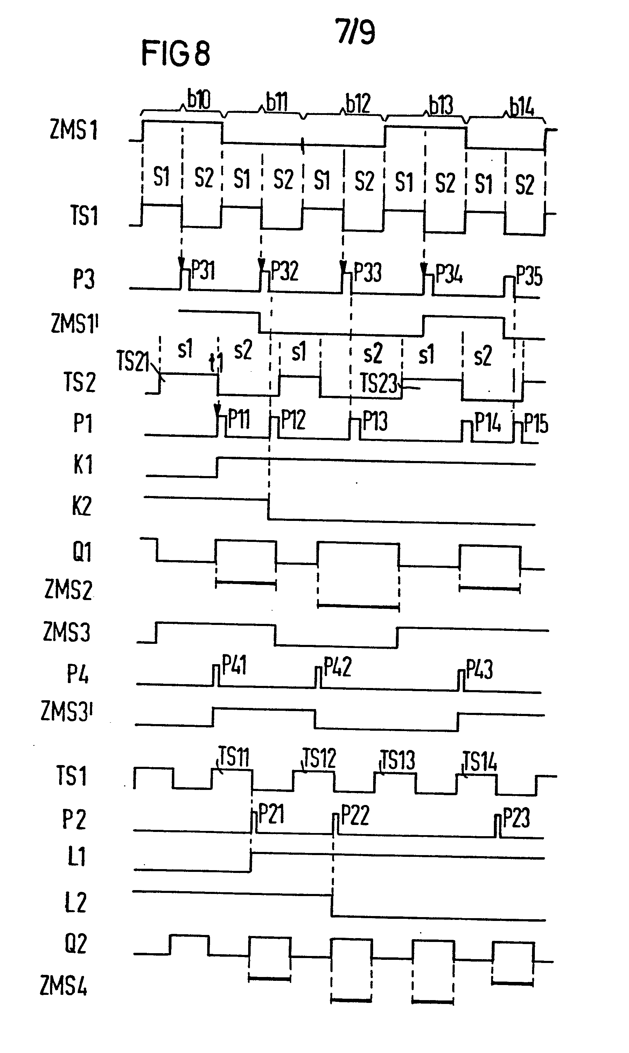

Fig. 8 zeigt einige Signale, anhand derer die Wirkungsweise der in Fig. 7 dargestellten Ankoppeleinrichtung erläutert wird. Über den Sendebus SB1 wird das Zeitmultiplexsignal ZMS1 dem Pufferspeicher PSK zugeführt. Die Impulse des Signals P3 koinzidieren mit den negativen Impulsflanken des Taktsignals TS1. Mit den Impulsen des Signals P3 übernimmt der Pufferspeicher PSK die einzelnen Binärwerte des Zeitmultiplexsignals ZMS1 und speichert sie bis zum nächsten Impuls des Signals P3. Auf diese Weise ergibt sich das verzögerte Zeitmultiplexsignal ZMS1'. Die einzelnen Binärwerte der über den Adressenbus AB1 zugeführten Adressen werden in ähnlicher Weise im Pufferspeicher PSK zwischengespeichert. Wenn beispielsweise der Adressenbus AB1 aus sechs Leitungen besteht, dann enthält der Pufferspeicher PSK sechs Speicher zur Speicherung der Adressen und einen Speicher zur Speicherung des Zeitmultiplexsignals ZMS1. Alle Speicher des Pufferspeichers PSK werden mit dem gleichen Signal P3 gesteuert.

Ähnlich wie gemäß Fig. 4 werden auch gemäß Fig. 8 die Perioden des Taktsignals TS1 in die Teile S1 und S2 unterteilt. Diese beiden Teile sind im allgemeinen nicht gleich groß und die negativen Impulsflanken des Taktsignals TS1 treten im allgemeinen nicht in der Mitte der Binärwerte b10, b11, b12, b13, b14 auf. Auch die Periodendauer des Taktsignals TS2 wird in je einen ersten Teil s1 und je einen zweiten Teil s2 unterteilt. Die einzelnen Bits des Zeitmultiplexsignals ZMS1 sollen wieder während der Dauer der Teile S2 gespeichert und während der Teile s2 ausgelesen werden. Die Schreibbefehle P1 werden derart erzeugt, daß sie einerseits nach einem Impuls der Impulsfolge P3 und andererseits während dem darauffolgenden Teil s2 des Taktsignals TS2 auftreten. Beispielsweise soll der Schreibbefehl P11 nach dem Impuls P31 und während des Teiles s2 erzeugt werden. Der Schreibbefehl P11 kann daher frühestens kurz nach dem Zeitpunkt t1 erzeugt werden, weil der Impuls TS21 eine frühere Erzeugung verhindert. Dagegen kann der Schreibbefehl P12 unmittelbar nach dem Impuls P32 auftreten, weil zu diesem Zeitpunkt ein Teil s2 des Taktsignals TS2 gegeben ist. In ähnlicher Weise werden die Schreibbefehle P13 bzw. P15 unmittelbar nach den entsprechenden Impulsen P33 bzw. P35 erzeugt. Der Schreibbefehl P14 muß dagegen mit einer gewissen Verzögerung erzeugt werden, weil der Teil s1 in Form des Impulses TS23 eine frühere Erzeugung des Schreibbefehls P14 verhindert.

Mit Hilfe der Schreibbefehle P1 werden die gleichzeitig auftretenden Binärwerte des verzögerten Zeitmultiplexsignals ZMS1' in die entsprechenden Speicherzellen K1, K2 ... Kn übernommen.

Mit Hilfe der Taktsteuerung TS3 werden die Lesebefehle Q1 erzeugt, die im Vergleich zum Taktsignal TS2 invertiert sind. Die in den Kippstufen K1 bis Kn gespeicherten Informationen werden wie im Fall der Fig. 3 immer dann gelesen, wenn einerseits ein Decodiersignal des zugeordneten Adreßdecodierers M1 bis Mn vorliegt und wenn andererseits ein Lesebefehl Q1 auftritt. Auf diese Weise werden über die Ausgänge der Speicherzellen K1 bis Kn die in Fig. 8 dargestellten Binärwerte des Zeitmultiplexsignals ZMS2 abgegeben.

Über den Sendebus SB2 wird das Zeitmultiplexsignal ZMS3 dem Pufferspeicher PSL zugeführt. Die Impulse des Signals P4 koinzidieren mit den negativen Impulsflanken des Taktsignals TS2. Mit den Impulsen des Signals P4 übernimmt der Pufferspeicher PSL die einzelnen Binärwerte des Zeitmultiplexsignals ZMS3 und speichert sie bis zum nächsten Impuls des Signals P4. Auf diese Weise ergibt sich das verzögerte Zeitmultiplexsignal ZMS3'. Die einzelnen Binärwerte der über den Adressenbus AB2 zugeführten Adressen werden in ähnlicher Weise im Pufferspeicher PSL zwischengespeichert. Wenn beispielsweise der Adressenbus AB2 aus sechs Leitungen besteht, dann enthält der Pufferspeicher PSL sechs Speicher zur Speicherung der Adressen und einen Speicher zur Speicherung des Zeitmultiplexsignals ZMS3. Alle Speicher des Pufferspeichers PSL werden mit dem gleichen Signal P4 gesteuert. Die Schreibbefehle P2 werden derart erzeugt, daß sie einerseits nach den Impulsen P4 auftreten und andererseits nicht mit den Teilen S1 des Taktsignals TS1 koinzidieren. Die Schreibbefehle P21 bzw. P22 bzw. P23 werden daher verzögert nach den entsprechenden Impulsen P41 bzw. P42 bzw. P43 erzeugt und zwar derart, daß sie nicht mit den Impulsen TS11 bzw. TS12 bzw. TS14 koinzidieren. Die Speicherzellen L1 bis Ln übernehmen mit den Schreibimpulsen P21, P22, P23 ... die einzelnen Binärwerte des verzögerten Zeitmultiplexsignals ZMS3'. Die Lesebefehle Q2 gleichen dem invertierten Taktsignal TS1. Mit Hilfe dieser Lesebefehle werden die Inhalte der Speicherzellen L1 bis Ln ausgelesen und ergeben die einzelnen Binärwerte des Zeitmultiplexsignals ZMS4.

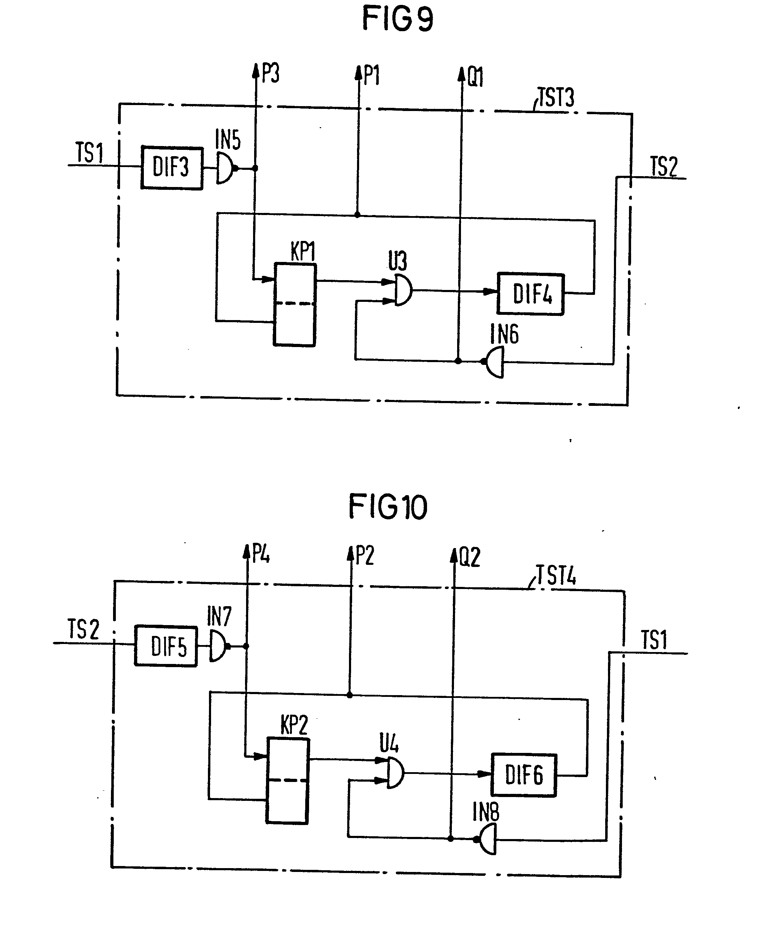

Fig. 9 zeigt ein Ausführungsbeispiel der in Fig. 7 schematisch dargestellten Taktsteuerung TST3. Mit Hilfe der Stufe DIF3 wird das Taktsignal TS1 differenziert und durch Gleichrichtung werden die negativen Impulsanteile unterdrückt. Nach Invertierung mit dem Inverter IN5 ergeben sich die einzelnen Impulse des Signals P3. Die Leseimpulse Q1 sind im Vergleich zum Taktsignal TS2 invertiert. Die Schreibbefehle P1 werden mit der Kippstufe KP1, mit dem UND-Glied U3, mit dem Inverter IN6 und mit der Stufe DIF4 gewonnen. Die Stufe DIF4 differenziert das Ausgangssignal des Gliedes U3 und bewirkt durch Gleichrichtung eine Unterdrückung der negativen Impulsanteile. Wegen des Inverters IN6 wird über den Ausgang des Gliedes U3 nur dann ein Ausgangssignal abgegeben, wenn ein 0-Wert des Taktsignals TS2 vorliegt. Die mit Hilfe der Stufe DIF4 erzeugten Schreibbefehle P1 können somit nur während der Dauer der 0-Werte des Taktsignals TS2 auftreten. Die Kippstufe KP1 wird mit den Impulsen P3 gesetzt und mit den Impulsen P1 zurückgesetzt. Beispielsweise wird die Kippstufe KP1 mit dem Impuls P31 gesetzt so daß über deren Ausgang ein 1-Wert an das Glied U3 abgegeben wird. Dieser 1-Wert kann aber kein Ausgangssignal am Glied U3 bewirken, da vom Inverter IN6 her ein 0-Wert anliegt. Die Kippstufe KP1 bewirkt somit die anhand der Fig. 8 beschriebene Verzögerung der Schreibbefehle P11 und P14.

Fig. 10 zeigt ein Ausführungsbeispiel der in Fig. 7 dargestellten Taktsteuerung TST4. Die Stufe DIF5 bzw. der Inverter IN7 entspricht der in Fig. 9 dargestellten Stufe DIF3 bzw. dem Inverter IN5. Das Taktsignal TS2 wird mit Hilfe der Stufe DIF5 differenziert und durch Gleichrichtung werden die positiven Impulsanteile unterdrückt. Die negativen Impulsanteile werden mit Hilfe des Inverters IN7 invertiert, so daß sich die Impulse des Signals P4 ergeben. Das Signal Q2 ist im Vergleich zum Taktsignal invertiert. Die Schreibbefehle P2 werden mit Hilfe der Kippstufe KP2, mit dem Glied U4, mit dem Inverter IN8 und mit Hilfe der Stufe DIF6 erzeugt. Dabei verhindert der Inverter IN8, daß die Schreibbefehle P2 während der Dauer der 1-Werte des Taktsignals TS1 erzeugt werden. Die Kippstufe KP2 bewirkt gegebenenfalls eine Verzögerung einzelner Schreibbefehle. Beispielsweise werden die in Fig. 8 dargestellten Schreibbefehle P21 und P23 mit Hilfe dieser Kippstufe KP2 verzögert erzeugt.

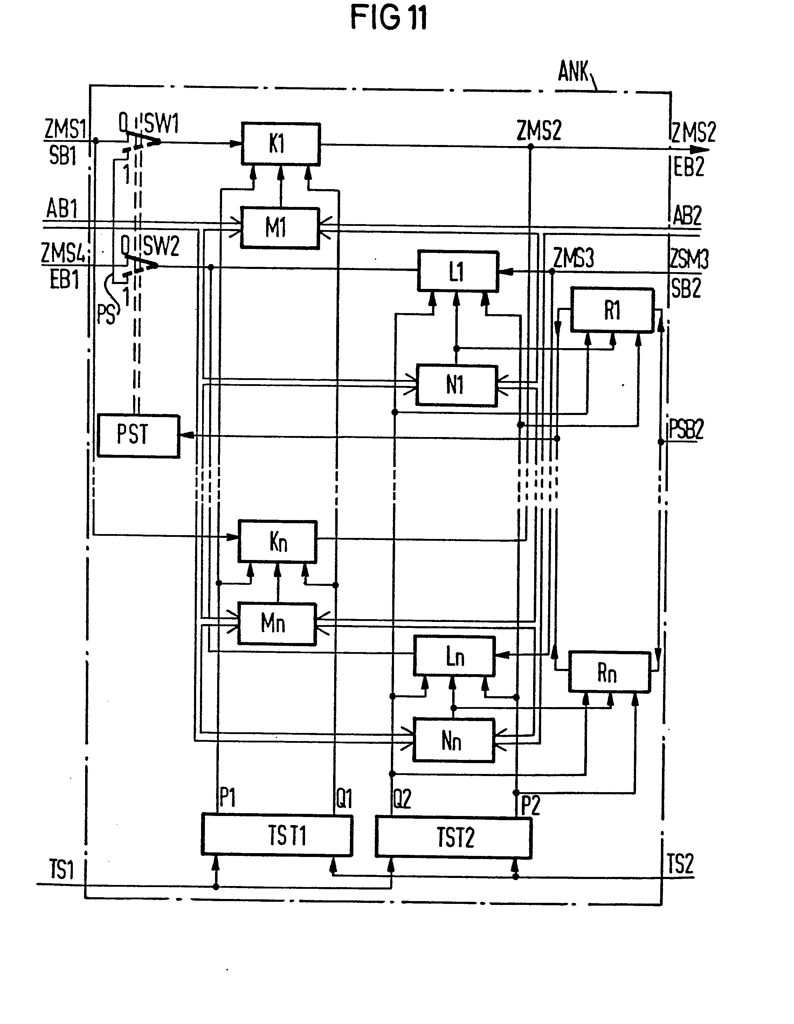

Fig. 11 zeigt ein weiteres Ausführungsbeispiel der in Fig.

2 schematisch dargestellten Ankoppeleinrichtung, die sich
speziell dann bewährt, wenn Prüfschleifen gegebenenfalls
geschlossen werden sollen. Außer dem Sendebus SB2 ist der
Prüfschleifenbus PSB2 vorgesehen, über den seriell während
der Dauer der einzelnen Zeitschlitze Prüfschleifensignale
übertragen werden können. Diese Prüfschleifensignale bestehen jeweils nur aus einem einzigen Bit, wobei beispielsweise ein 0-Wert keine Einschaltung der Prüfschleife und
ein 1-Wert eine Einschaltung der Prüfschleife bedeuten
soll. Zusätzlich zu den Speicherzellen L1 bis Ln sind die
Speicherzellen R1 bis Rn vorgesehen, welche mit den gleichen Decodierimpulsen betrieben werden, wie die entsprechenden Speicherzellen L1 bis Ln. Außerdem werden diese
Speicherzellen R1 bis Rn mit den Schreibimpulsen P2 und
mit den Leseimpulsen Q2 gesteuert. Alle Ausgänge der Speicher R1 bis Rn sind an die Prüfschleifensteuerstufe PST
angeschlossen.

Wenn beispielsweise gemäß Fig. 4 während der Dauer des Bits
b6 ein 0-Signal über den Prüfschleifenbus PSB2 übertragen
wird, dann wird dieses 0-Signal zum Zeitpunkt t7 in die
Speicherzelle R1 übernommen. Kurz nach dem Zeitpunkt t7
wird dieses 0-Signal mit einem Lesebefehl Q2 gelesen und
der Prüfschleifensteuerstufe PST zugeführt. Die Prüfschleifensteuerstufe PST stellt die entsprechenden 0-Stellungen
der beiden Schalter SW1 und SW2 ein, so daß die Prüfschleife PS abgeschaltet ist.

Wenn dagegen während der Dauer des Bits b6 ein 1-Signal
über den Prüfschleifenbus PSB2 zugeführt wird, dann speichert die Speicherzelle R1 ab dem Zeitpunkt t7 ein Signal,
das dem in Fig. 4 dargestellten Signal L1 gleicht. Nach
dem Zeitpunkt t7 wird mit dem Lesebefehl Q2 das 1-Signal
der Speicherzelle R1 gelesen und mit Hilfe der Prüfschleifensteuerstufe PST werden die beiden 1-Stellungen der
Schalter SW1 und SW2 eingestellt. Damit ist die Prüfschleife PS mindestens während der Dauer dieses einzelnen Zeitschlitzes geschlossen und das betreffende Bit des Zeitmultiplexsignals ZMS4 wird über den Schalter SW2, über die Prüfschleife PS und über den Schalter SW1 dem Dateneingang der
Speicherzelle K1 zugeführt. Dabei werden die Schalter SW1,
SW2 mit Hilfe der Prüfschleifensteuerstufe PST derart frühzeitig innerhalb des betreffenden Zeitschlitzes betätigt,
daß das darauf folgende Bit des Zeitmultiplexsignals ZMS4
sicher über die Prüfschleife PS der Speicherzelle K1 zugeführt wird. Die Prüfschleife PS wird während des dem Bit
B6 zugeordneten Zeitschlitzes immer wieder geschlossen,
solange in der Speicherzelle R1 ein 1-Signal gespeichert
ist. Es kann dann über den einen Zeitschlitz zeitlich nacheinander ein längerer Prüftext übertragen werden. Unabhängig davon kann die Prüfschleife PS während der übrigen Zeitschlitze entweder geschlossen oder geöffnet sein, in Abhängigkeit von den Signalen die in den Speicherzellen R1 bis
Rn gespeichert sind.

Die in Fig. 11 dargestellte Prüfschleife PS kann auch in
Kombination mit der in Fig. 7 dargestellten Ankoppeleinrichtung betrieben werden. In diesem Fall wird der Prüfsignalbus PSB2 dem in Fig. 7 dargestellten Pufferspeicher
PSL zugeführt und der diesbezügliche Ausgang des Pufferspeichers ist an die Dateneingänge der in Fig. 11 dargestellten Speicherzellen R1 bis Rn angeschlossen. Die in
Fig. 11 dargestellten Schalter SW1 und SW2 verbinden in
ihrer O-Schalterstellung einerseits den ersten Sendebus
SB1 mit dem Pufferspeicher PSK und andererseits die Datenausgänge der Speicherzellen L1 bis Ln mit dem ersten Empfangsbus EB1. In ihrer 1-Schalterstellung verbinden die
beiden Schalter SW1 und SW2 die Ausgänge der Speicherzellen L1 bis Ln über eine Prüfschleife mit dem ersten Sendebus SB1. Diese Prüfschleife ist somit - vom ersten Sendebus SB1 aus gesehen - noch vor dem Pufferspeicher PSK
angeschlossen. Die beiden Schalter werden - wie in Fig.
11 dargestellt - mit Hilfe der Prüfschleifensteuerstufe
PST gesteuert und diese Prüfschleifensteuerstufe ist an
die Ausgänge der Speicherzellen R1 bis Rn angeschlossen.

Patentansprüche

1. Ankoppeleinrichtung zum Ankoppeln einer ersten Datenverarbeitungsanlage an eine zweite Datenverarbeitungsanlage; mit einem ersten Sendebus, einem ersten Adressenbus, einem ersten Empfangsbus und einer ersten Taktleitung im Bereich der ersten Datenverarbeitungsanlage; mit einem zweiten Sendebus, mit einem zweiten Adressenbus, einem zweiten Empfangsbus und einer zweiten Taktleitung im Bereich der zweiten Datenverarbeitungsanlage, d a d u r c h  g e k e n n - z e i c h n e t, daß pro Adresse des ersten Adressenbusses (AB1) je eine erste Speicherzelle: (K1 bis Kn) und pro Adresse des zweiten Adressenbusses (AB2) je eine zweite Speicherzelle (L1 bis Ln) vorgesehen ist, daß die Gruppe der ersten Speicherzellen (K1 bis Kn) über ihre Dateneingänge an den einen ersten Sendebus (SB1) und über ihre Datenausgänge an den zweiten Empfangsbus (EB2) angeschlossen ist, daß die Gruppe der zweiten Speicherzellen (L1 bis Ln) über ihre Dateneingänge an den zweiten Sendebus (SB2) und über ihre Datenausgänge an den ersten Empfangsbus (EB1) angeschlossen ist, daß die erste und die zweite Gruppe von Speicherzellen (K1 bis Kn und L1 bis Ln) über Decodierleitungen an Adreßdecodierer (M1 bis Mn und N1 bis Nn) angeschlossen sind, daß die Adreßdecodierer mit dem ersten Adressenbus (AB1) und dem zweiten Adressenbus (AB2) verbunden sind, daß eine erste und zweite Taktsteuerung (TST1 und TST2) an die erste und zweite Taktleitung angeschlossen sind und mit Hilfe der ersten bzw. zweiten Taktsteuerung Folgen von ersten bzw. zweiten Schreibbefehlen (P1, P2) erzeugt werden, mit denen die Daten des ersten bzw. zweiten Sendebusses (SB1 bzw. SB2) in die adressierten Speicherzellen der ersten bzw. zweiten Gruppe übernommen werden und daß die erste bzw. zweite Taktsteuerung (TST1 bzw. TST2) Folgen von ersten bzw. zweiten Lesebefehlen (Q1 bzw. Q2) erzeugt, mit Hilfe derer die Daten aus den Speicherzellen der ersten bzw. zweiten Gruppe ausgelesen werden.

2. Ankoppeleinrichtung nach Anspruch 1, d a d u r c h
g e k e n n z e i c h n e t , daß die ersten bzw. zweiten
Schreibbefehle (P1 bzw. P2) mit vorgegebenen Impulsflanken
des über die erste bzw. zweite Taktleitung zugeführten Taktsignals (TS1 bzw. TS2) koinzidieren und daß die ersten bzw.
zweiten Lesebefehle (Q1 bzw. Q2) nach den ersten bzw. zweiten Schreibbefehlen (P1 bzw. P2) erzeugt werden, wenn das
zweite bzw. erste Taktsignal (TS2 bzw. TS1) einen vorgegebenen Binärwert (O) annimmt. (Fig. 5 bzw. 6)

3. Ankoppeleinrichtung nach Anspruch 1, d a d u r c h
g e k e n n z e i c h n e t , daß der erste Sendebus (SB1)
bzw. der erste Adressenbus (AB1) über eine erste Gruppe
von Pufferspeichern (PSK) an die erste Gruppe der Speicherzellen (K1 bis Kn) und der zweite Sendebus (SB2) bzw. der
zweite Adressenbus (AB2) über eine zweite Gruppe von Pufferspeichern (PSL) an die zweite Gruppe der Speicherzellen
(L1 bis Ln) angeschlossen sind, daß die erste Gruppe der
Pufferspeicher (PSK) bzw. die zweite Gruppe der Pufferspeicher (PSL) mit einem ersten bzw. zweiten Speichersignal
(P3 bzw. P4) gesteuert wird, das mit Impulsflanken des ersten bzw. zweiten Taktsignals (TS1 bzw. TS2) koinzidiert
und daß die Folge der ersten bzw. zweiten Schreibbefehle
(P1 bzw. P2) nach dem Auftreten der ersten bzw. zweiten
Speichersignale (P3 bzw. P4) und gleichzeitig mit einem
vorgegebenen Binärwert des zweiten bzw. ersten Taktsignals
(TS2 bzw. TS1) erzeugt wird (Fig. 7 und 8).

4. Ankoppeleinrichtung nach Anspruch 1, d a d u r c h
g e k e n n z e i c h n e t , daß eine dritte Gruppe von
Speicherzellen (R1 bis Rn) vorgesehen ist, deren Dateneingänge an einen Prüfsignalbus (PSB2) angeschlossen sind,
deren Datenausgänge an eine Prüfschleifensteuerstufe (PST)
angeschlossen sind und die an die Decodierleitungen der
ersten oder der zweiten Gruppe von Speicherzellen angeschlossen sind, daß zwei Schalter (SW1, SW2) vorgesehen
sind, die in einer ersten Schalterstellung dem zweiten

0034355

Sendebus (SB2) mit den Dateneingängen der zweiten Gruppe von Speicherzellen (L1 bis Ln) und die Datenausgänge der ersten Gruppe von Speicherzellen (K1 bis Kn) mit dem zweiten Empfangsbus (EB2) verbinden bzw. den ersten Sendebus (SB1) mit den Dateneingängen der ersten Gruppe von Speicherzellen (K1 bis Kn) und die Datenausgänge der zweiten Gruppe von Speicherzellen (L1 bis Ln) mit dem ersten Empfangsbus (EB1) verbinden, daß die zwei Schalter (SW1, SW2) in ihrer zweiten Schalterstellung die Datenausgänge der ersten Gruppe von Speicherzellen (K1 bis Kn) über eine P Prüfschleife an die Dateneingänge der zweiten Gruppe von Speicherzellen (L1 bis Ln) bzw. die Datenausgänge der zweiten Gruppe von Speicherzellen (L1 bis Ln) über die Prüfschleife (PS) an die Dateneingänge (K1 bis Kn) verbinden und daß mit der Prüfschleifensteuerstufe (PST) bei fehlendem Prüfsignal bzw. bei vorhandenem Prüfsignal die erste bzw. zweite Schalterstellung (O bzw. 1) eingestellt wird. (Fig. 11).

FIG 1

2/9

FIG 2

FIG 3    3/9

0034355

FIG 4

4/9

0034355

0034355

# FIG 5

# FIG 6

FIG 7

6/9

0034355

FIG 8

0034355

## FIG 9

## FIG 10

0034355

# FIG 11

0034355

| | Europäisches Patentamt | **EUROPÄISCHER RECHERCHENBERICHT** | Nummer der Anmeldung<br>EP 81 10 1035 |

<table>
<tr><th colspan="3">EINSCHLÄGIGE DOKUMENTE</th><th>KLASSIFIKATION DER ANMELDUNG (Int. Cl.)</th></tr>
<tr><td>Kategorie</td><td>Kennzeichnung des Dokuments mit Angabe, soweit erforderlich, der maßgeblichen Teile</td><td>betrifft Anspruch</td><td rowspan="2">H 04 L 11/00<br>H 04 J 3/06<br>H 04 J 3/16</td></tr>
<tr><td>A</td><td>TELCOM REPORT, Band 2, Heft 5, Oktober 1979, MÜNCHEN (DE) DIETER et al.: "Zeitmultiplexsystem ZD 1000-E10 für synchrone Daten-übertragung in Datennetzen mit 10-bit-Envelope-Struktur", Seiten 355 bis 362<br><br>* Seite 356, mittlere Spalte, Zeilen 9-34; rechte Spalte, Zeilen 15-29; Seite 358, mittlere Spalte, Zeile 37 bis rechte Spalte, Zeile 7; Seite 359, Bilder 4 und 5; Seite 360, linke Spalte, Zeile 47 bis rechte Spalte, Zeile 26 *<br>---</td><td>1,4</td></tr>
<tr><td>A</td><td>DE - A - 2 419 566 (SIEMENS)<br><br>* Seite 3, Zeile 5 bis Seite 5, Zeile 21 *<br>---</td><td>1</td><td>RECHERCHIERTE SACHGEBIETE (Int. Cl.)<br><br>H 04 L 11/00<br>H 04 J 3/06<br>H 04 J 3/16<br>H 04 J 3/00<br>H 04 Q 11/04<br>H 04 L 5/24</td></tr>
<tr><td>A</td><td>DE - A - 2 141 184 (INTERNATIONAL STANDARD ELECTRIC)<br><br>* Seite 3, Zeilen 27-31; Seite 4, Zeilen 7-25 *<br>---</td><td>1</td><td></td></tr>
<tr><td>A</td><td>DE - A - 1 917 891 (SIEMENS)<br><br>* Seite 7, Zeile 8 bis Seite 8, Zeile 9 *<br>---</td><td>1</td><td>KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument</td></tr>
<tr><td>A</td><td>DE - A - 2 146 392 (SIEMENS)<br><br>* Seite 3, Zeile 27 bis Seite 4, Zeile 22 *<br>---</td><td>1</td></tr>
<tr><td>A</td><td>DE - A - 2 512 271 (SIEMENS)<br><br>../.</td><td>1</td></tr>
</table>

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
| --- | --- | --- |
| Den Haag | 25.05.1981 | DE MUYT |

EPA form 1503.1   06.78

0034355

**Europäisches Patentamt**

**EUROPÄISCHER TEILRECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | * Seite 5, Zeile 17 bis Seite 6, Zeile 7 * | | |
| | --- | | |
| A | IBM TECHNICAL DISCLOSURE BULLETIN, Band 22, Heft 5, Oktober 1979, NEW YORK (US) JANSON et al.: "Modular Asynchronous Circuit Switch", Seiten 2100 und 2101. * Gesamtes Artikel * | 1 | |
| | ---------- | | RECHERCHIERTE SACHGEBIETE (Int. Cl.³) |

EPA Form 1505.3   06.78